# DEMANDE DE BREVET EUROPEEN

(11) **EP 4 344 798 A1**
(43) Date de publication de la demande: **03.04.2024**
(21) Numéro de dépôt: 22306432.0
(22) Date de dépôt: 27.09.2022
(51) Int. Cl.: B08B 3/02, B08B 3/14, B08B 13/00, B02C 21/02, B03B 9/06, B65B 1/00, B65F 1/00, B09B 101/35

(54) **STATION DE NETTOYAGE ET D'ENSACHAGE DE DECHETS D'AMIANTE**

(71) Demandeur: Malot, Constant, 71300 Saint-Berain-Sous-Sanvignes (FR)
(72) Inventeur: MALOT, Constant, 71300 Saint-Berain-Sous-Sanvignes (FR)
(74) Mandataire: Casalonga

(57) **Abrégé**

Station de nettoyage et d'ensachage de déchets d'amiante, comprenant une enceinte de décontamination (2), une entrée (3) des déchets dans l'enceinte de décontamination (2), une sortie (4) des déchets hors de l'enceinte de décontamination (2), des moyens d'acheminement (6) des déchets entre l'entrée (3) et la sortie (4), un dispositif de lavage (5) des déchets disposé entre l'entrée (3) et la sortie (4) sur le trajet des déchets, et un dispositif d'ensachage (7) des déchets disposé en aval du dispositif de lavage (5).

## Description

La présente invention concerne, de manière générale, le désamiantage et, plus précisément, le traitement de déchets contaminés par l'amiante obtenus sur des chantiers de désamiantage.

Plus précisément, l'invention se rapporte à une station de nettoyage et d'ensachage de déchets d'amiante.

Les travaux de désamiantage, qui visent à retirer l'amiante d'anciennes constructions, conduisent à l'obtention de déchets contaminés. Compte tenu de la haute dangerosité de l'amiante, le traitement de ces déchets nécessite d'être réalisé avec grande précaution.

Classiquement, un chantier de désamiantage est organisé en une première zone, dite « zone de travail », au sein de laquelle l'amiante est retirée de la construction amiantée.

Les déchets contaminés qui en résultent sont généralement emballés dans un premier sac puis acheminés par un opérateur vers une deuxième zone, dite « zone de chantier », adjacente à la zone de travail. Afin de pouvoir les éliminer sans danger, ils sont rincés puis sur-ensachés dans la zone de chantier.

Bien que nécessaires, ces nombreuses manipulations sont particulièrement contraignantes pour l'opérateur, d'autant que les déchets peuvent atteindre jusqu'à 20kg. Ceci a pour conséquence une fatigue accrue et des risques de troubles musculosquelettiques.

L'invention a donc pour but de remédier à ces inconvénients et de proposer une solution de décontamination simple et rapide à mettre en place pour le nettoyage et l'ensachage ou ré-ensachage de déchets contaminés par de l'amiante, permettant de limiter les manipulations de ces déchets par les opérateurs.

Il est donc proposé une station de nettoyage et d'ensachage de déchets d'amiante, comprenant une enceinte de décontamination, une entrée des déchets dans l'enceinte de décontamination, une sortie des déchets hors de l'enceinte de décontamination, des moyens d'acheminement des déchets entre l'entrée et la sortie, un dispositif de lavage des déchets disposé entre l'entrée et la sortie sur le trajet des déchets, et un dispositif d'ensachage des déchets disposé en aval du dispositif de lavage.

La station de nettoyage et d'ensachage de déchets permet la décontamination des déchets d'amiante grâce à son dispositif de lavage et son dispositif d'ensachage, tout en limitant les manipulations par les opérateurs responsable du traitement des déchets.

Les déchets sont acheminés par les moyens d'acheminement afin d'être lavés puis ensachés sans nécessiter la manutention d'un opérateur.

De préférence, la station de nettoyage et d'ensachage comprend au moins un convoyeur de dépose disposé au moins partiellement en amont de l'entrée des déchets dans l'enceinte de décontamination et raccordé aux moyens d'acheminement des déchets.

De préférence, la station de nettoyage et d'ensachage comprend au moins un convoyeur de récupération disposé en aval de la sortie des déchets pour la récupération des déchets lavés et ensachés.

Avantageusement, le convoyeur de dépose et/ou le convoyeur de récupération peuvent être configurés pour être déplacés entre une position déployée ou position de travail et une position reployée ou position de transport.

Avantageusement, les moyens d'acheminement peuvent comprendre au moins un convoyeur d'évacuation disposé entre le dispositif de lavage et la sortie des déchets de l'enceinte de contamination, le convoyeur d'évacuation comportant une première extrémité raccordée au dispositif de lavage et une deuxième extrémité opposée raccordée à la sortie des déchets, la sortie des déchets et la deuxième extrémité étant positionnées à une position supérieure à la première extrémité.

De manière avantageuse, le convoyeur d'évacuation peut comprendre des moyens de détection de déchets sur le convoyeur d'évacuation.

Selon une caractéristique, le dispositif d'ensachage peut être positionné sur la sortie de l'enceinte de contamination.

De préférence, la station de nettoyage et d'ensachage comprend des moyens de déplacement de la station de nettoyage et d'ensachage.

Préférentiellement, le dispositif de lavage comporte un dispositif de traitement des eaux comportant une cuve de récupération d'eau, une boucle de circulation d'eau fermée fluidiquement connectée à la cuve de récupération, et au moins un filtre positionné sur la boucle de circulation en aval de la cuve de récupération.

Dans un mode de réalisation, le dispositif de lavage peut comporter un anneau de pulvérisation configuré pour rincer les déchets sur 360°.

D'autres buts, avantages et caractéristiques ressortiront de la description qui va suivre, donnée à titre purement illustratif et faite en référence aux dessins annexés sur lesquels :
[Fig 1] illustre une station de nettoyage et d'ensachage en position déployée selon un mode de réalisation de l'invention.
[Fig 2] illustre schématiquement un dispositif de lavage selon un mode de réalisation de l'invention.
[Fig 3] est une vue détaillée d'un anneau de pulvérisation du dispositif de lavage selon la figure 3.
{Fig 4] illustre un dispositif d'ensachage positionné sur la sortie d'une enceinte de décontamination de la station de nettoyage et d'ensachage illustré à la figure 1.
[Fig 5] illustre la station de nettoyage et d'ensachage de la figure 1 en position reployée pour le transport.

Par ailleurs, l'expression « au moins un » utilisée dans la présente description est équivalente à l'expression « un ou plusieurs ».

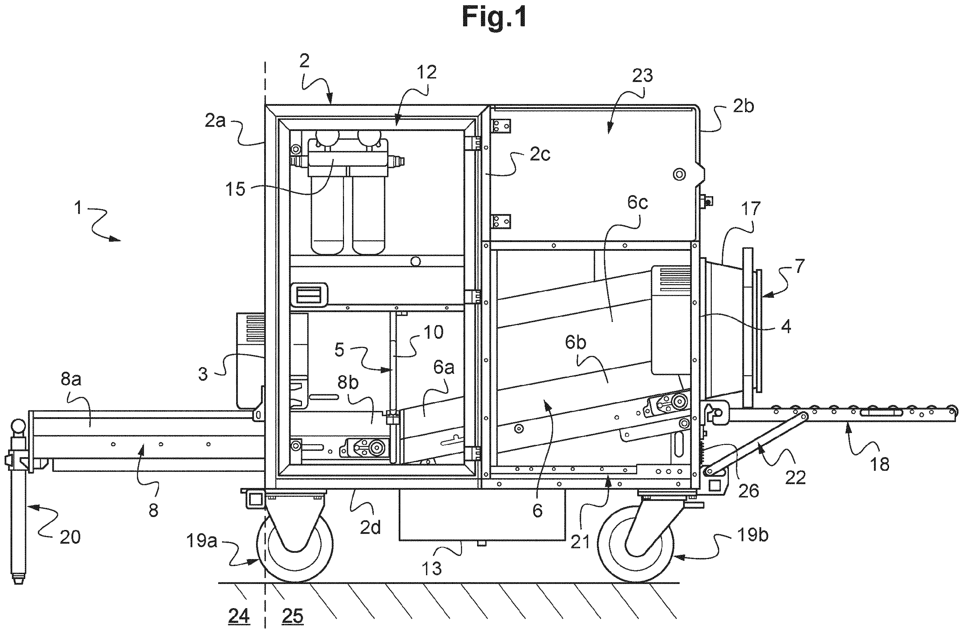

La figure 1 illustre une station de nettoyage et d'ensachage 1 destinée à la décontamination de déchets d'amiante, notamment sur des chantiers de désamiantage.

A la figure 1, la station est représentée dans une configuration de travail, en position déployée.

La station de nettoyage et d'ensachage 1 comprend une enceinte de décontamination 2 comportant une entrée 3 des déchets dans l'enceinte de décontamination et une sortie 4 des déchets hors de l'enceinte de décontamination.

L'enceinte de décontamination 2 est avantageusement délimitée par un châssis qui est, par exemple, en acier inoxydable, dont la robustesse et la tenue dans le temps sont particulièrement importantes.

Dans l'exemple illustré, l'enceinte de décontamination 2 est une enceinte fermée, formée de faces avant et arrière opposées, respectivement 2a et 2b.

L'entrée 3 et la sortie 4 sont disposées, respectivement, sur les faces avant et arrière 2a et 2b de l'enceinte de décontamination 2 et sont formées, respectivement, par des première et deuxième ouvertures dont la largeur peut être adaptée à la taille des déchets d'amiante à décontaminer.

La station de nettoyage et d'ensachage 1 comprend également des moyens d'acheminement permettant notamment d'acheminer vers la sortie 4 les déchets admis dans l'enceinte de décontamination 2 par l'entrée 3.

De plus, la station de nettoyage et d'ensachage 1 comprend un dispositif de lavage 5 des déchets disposé dans l'enceinte de décontamination 2, sur le trajet des déchets entre l'entrée 3 et la sortie 4.

Dans l'exemple illustré, les moyens d'acheminement comportent un convoyeur d'évacuation 6 disposé entre le dispositif de lavage 5 et la sortie 4 des déchets de l'enceinte de contamination 2.

En outre, la station de nettoyage et d'ensachage 1 comprend un dispositif d'ensachage 7 des déchets.

Le dispositif d'ensachage 7 est disposé en aval du dispositif de lavage 5.

De préférence, la station de nettoyage et d'ensachage 1 comporte un convoyeur de dépose 8 disposé au moins partiellement en amont de l'entrée 3 des déchets dans l'enceinte de décontamination 2.

Le convoyeur de dépose 8 est raccordé aux moyens d'acheminement, qui dans l'exemple illustré sont formés par le convoyeur d'évacuation 6.

Le convoyeur de dépose 8 permet le dépôt de déchets d'amiante en amont de l'enceinte de décontamination 2 qu'il transfère, sans étape de manutention de l'opérateur, vers le dispositif de lavage 5 à l'intérieur de l'enceinte de décontamination 2.

De préférence, les déchets d'amiante déposés sur le convoyeur de dépose 8 sont emballés dans un premier sac.

Le convoyeur de dépose 8 comporte, par exemple, un tapis motorisé.

La mise en marche et l'arrêt du convoyeur de dépose peuvent être commandés à partir d'un système de commande et d'une interface d'actionnement comportant par exemple un bouton poussoir disposé sur la station de nettoyage et d'ensachage 1 et actionnable par un opérateur.

De préférence, les déchets déposés sur le convoyeur de dépose 8 sont emballés dans un sac.

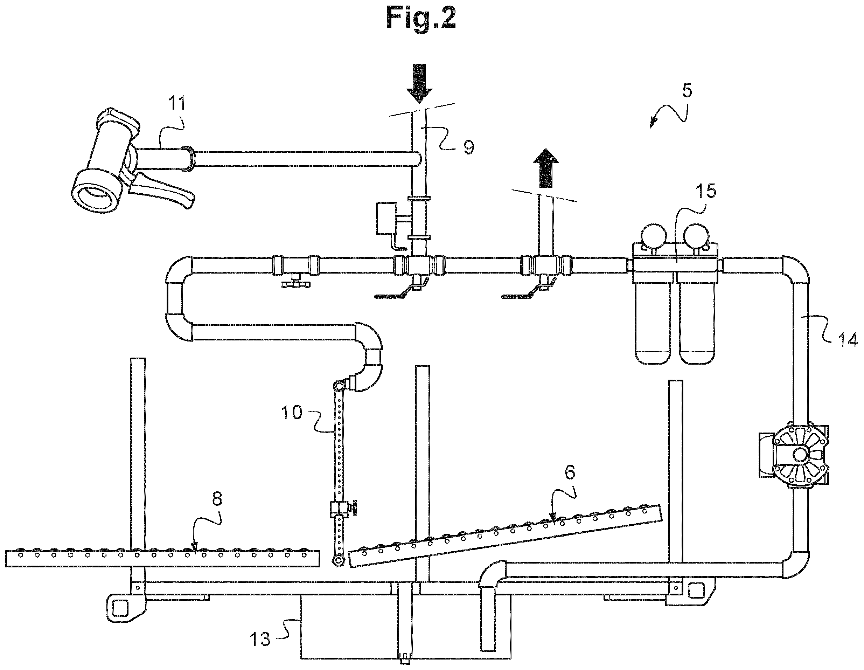

Comme cela est illustré à la figure 2, le dispositif de lavage 5 comporte une arrivée d'eau 9 pouvant être raccordée à un réseau de distribution d'eau pour l'alimentation en eau du dispositif de lavage 5.

Dans l'exemple illustré, le dispositif de lavage 5 comprend un anneau de pulvérisation 10, connectée à l'arrivée d'eau 9, permettant un rinçage des déchets sur 360°.

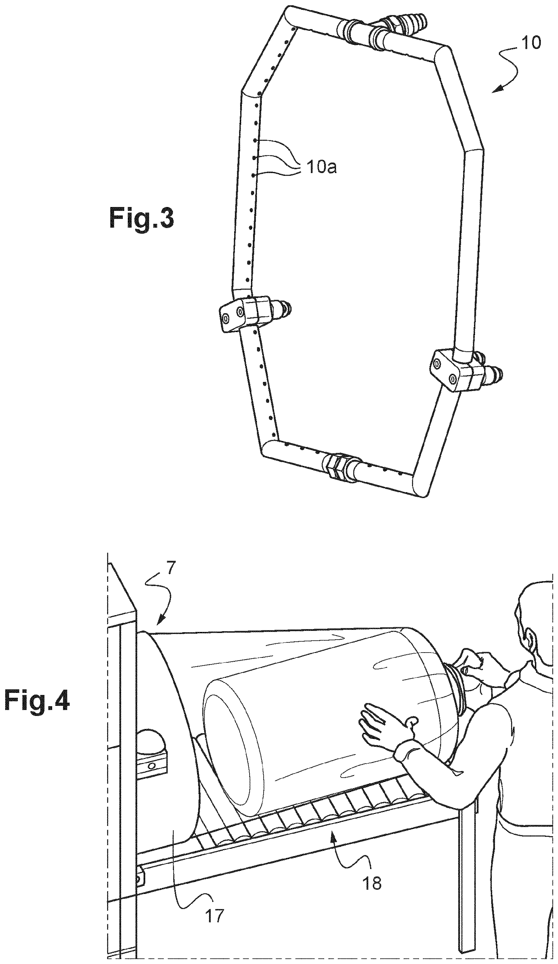

Une vue détaillée de l'anneau de pulvérisation 10 est illustrée à la figure 3. L'anneau de pulvérisation est formé par un tube creux et la pulvérisation est réalisée à partir d'une pluralité de trous ou buses 10a répartis le long du pourtour intérieur de l'anneau de pulvérisation 10.

L'anneau de pulvérisation 10 permet de rincer automatiquement les déchets le traversant lors de leur déplacement par les moyens d'acheminement.

Le dispositif de lavage 5 peut également comprendre des moyens de rinçage manuel pour le nettoyage et la décontamination de l'enceinte de décontamination 2.

Par exemple, le dispositif de lavage 5 peut comprendre un tuyau d'eau dont une première extrémité est raccordée à l'arrivée d'eau 9 et une deuxième extrémité comporte, par exemple, un pistolet d'arrosage 11.

Par exemple, la présence des moyens de rinçage manuel est particulièrement avantageuse pour rincer l'intérieur l'enceinte de décontamination 2 après la fin d'un chantier.

Afin de pouvoir réaliser un rinçage manuel de l'enceinte de décontamination 2, l'enceinte de décontamination 2 peut comprendre un accès à l'intérieur de l'enceinte de décontamination 2 et notamment un accès au dispositif de lavage 5. A cet égard, dans l'exemple illustré, une face avant 2c de l'enceinte de décontamination 2 comporte une porte 12 d'accès.

De préférence, le dispositif de lavage 5 comporte en outre un dispositif de traitement des eaux afin de décontaminer l'eau utilisée pour le lavage des déchets. La réutilisation de l'eau après décontamination permet de réaliser d'importante économies d'eau en réduisant la consommation d'eau lors d'un fonctionnement en circuit fermé.

Le dispositif de traitement des eaux comporte avantageusement une cuve de récupération d'eau 13 destinée à récupérer et stocker l'eau contaminée lors du rinçage des déchets.

Dans l'exemple illustré, la cuve de récupération d'eau 13 est disposée sous le dispositif de lavage 5, sur une face inférieure 2d de l'enceinte de décontamination 2.

De plus, le dispositif de traitement des eaux comporte une boucle de circulation d'eau 14 fermée, fluidiquement connectée à la cuve de récupération 13.

Un ou plusieurs filtres 15 de décontamination sont positionnés sur la boucle de circulation d'eau 14, en aval de la cuve de récupération 13.

Avantageusement, le dispositif de traitement des eaux comporte également une pompe permettant la circulation de l'eau au sein de la boucle de circulation d'eau 14, de la cuve de récupération d'eau 13 en direction des filtres 15.

Dans l'exemple illustré, le convoyeur de dépose 8 s'étend au travers de l'entrée 3 de l'enceinte de décontamination 2 de sorte qu'une première extrémité 8a du convoyeur de dépose 8 est positionnée en amont de l'entrée 3 des déchets et une deuxième extrémité 8b opposée du convoyeur de dépose 8 est positionnée dans l'enceinte de décontamination 2.

La deuxième extrémité 8b opposée du convoyeur de dépose 8 s'étend jusqu'à l'anneau de pulvérisation 10.

L'anneau de pulvérisation 10 est positionné entre le convoyeur de dépose 8 et le convoyeur d'évacuation 6.

Une première extrémité 6a du convoyeur d'évacuation 6 peut être raccordée à l'anneau de pulvérisation 10 et une deuxième extrémité 6b opposée du convoyeur d'évacuation 6 peut être raccordée à la sortie 4 des déchets, afin d'acheminer les déchets lavés vers la sortie 4 de l'enceinte de décontamination 2.

Dans l'exemple illustré, la sortie 4 est disposée à une position supérieure à la première extrémité du convoyeur d'évacuation 6, de sorte que l'axe général de ce dernier s'étend obliquement.

Le trajet ascendant des déchets vers la sortie 4 facilite l'écoulement de l'eau après le lavage des déchets avant leur sortie de l'enceinte de décontamination 2.

Dans l'exemple illustré, la deuxième extrémité 6b du convoyeur d'évacuation 6 est surmontée d'un élément supérieur 6c raccordé à la sortie 4 et formant un tunnel.

La présence du tunnel permet d'éviter les risques de coincement du sac des déchets rincés lors de leur trajet vers la sortie 4.

Avantageusement, le convoyeur d'évacuation 6 peut être motorisé.

De préférence, le convoyeur d'évacuation 6 comprend des moyens de détection de la présence de déchets sur le convoyeur d'évacuation 6.

Le convoyeur d'évacuation 6 peut être autonome et mis en marche lors de la détection de la présence de déchets.

Selon un exemple, les moyens de détection comportent une cellule laser avec réflecteur.

La station de nettoyage et d'ensachage 1 comporte également un dispositif d'ensachage 7 destiné à emballer les déchets après leur lavage.

Par ensachage, on entend l'emballage de déchets dans un sac. Dans l'exemple illustré, l'ensachage correspond à l'emballage dans un second sac de déchets emballés dans un premier sac. Dans ce dernier cas, il s'agit alors d'un sur-ensachage.

Dans l'exemple illustré, le dispositif d'ensachage 7 est positionné sur la sortie 4 de l'enceinte de contamination 2 afin de réaliser l'ensachage lors de la sortie des déchets hors de l'enceinte de décontamination 2. Il est ainsi possible d'éviter toute contamination lors de la sortie des déchets de l'enceinte de décontamination 2.

Comme cela est illustré à la figure 4, le dispositif d'ensachage 7 peut comporter un support 17 fixé de manière amovible autour de la sortie 4 de l'enceinte de décontamination 2, sur la face arrière 2b de l'enceinte de décontamination 2.

Un sac sans fin est positionné autour de la sortie 4, sur le support 17.

Le sac infini est, par exemple, en polyéthylène tri-couches.

Le dispositif d'ensachage 7 inclut, par exemple, un système Longopac^{®}.

De préférence, l'enceinte de décontamination 2 comporte un obturateur destiné à fermer la sortie 4 lorsque cette dernière n'est pas utilisée.

Avantageusement, l'obturateur s'ouvre uniquement lors de la sortie 4 des déchets et leur ensachage. L'obturateur permet ainsi d'isoler l'intérieur de l'enceinte de décontamination 2 de l'extérieur et de limiter les risques de contamination en aval de l'enceinte de décontamination 2.

Une trappe peut également obturer l'entrée 3 de l'enceinte de décontamination 2 lorsque l'entrée 3 est inutilisée. La trappe permet également une mise en sécurité en cas de coupure électrique.

De plus, la station de nettoyage et d'ensachage 1 comporte un convoyeur de récupération 18, disposé en aval de la sortie 4 des déchets de l'enceinte de décontamination 2, pour la récupération des déchets lavés et ensachés.

Dans l'exemple illustré, le convoyeur de récupération 18 est raccordé à la face arrière 2b de l'enceinte de décontamination 2.

Selon un exemple, le convoyeur de récupération 18 peut comporter un ensemble de rouleaux libres.

De plus, l'enceinte de décontamination 2 peut comprendre une grille 26 ayant pour fonction le passage d'un flux d'air propre permettant l'assainissement aéraulique au sein de l'enceinte de décontamination 2.

Avantageusement, la grille 26 peut être équipée d'un clapet. Le clapet permet notamment une sécurisation en cas de coupure aéraulique.

Dans l'exemple illustré, la grille est disposée sur la face arrière 2b de l'enceinte de décontamination 2.

De préférence, la station de nettoyage et d'ensachage 1 est mobile.

A cet égard, la station de nettoyage et d'ensachage 1 comprend avantageusement des moyens de déplacement.

Dans l'exemple illustré, les moyens de déplacement comprennent un ensemble de quatre roues 19a, 19b, dont deux roues fixes et deux roues pivotantes, sur lesquelles est montée l'enceinte de décontamination 2.

Les roues sont 19a, 19b fixées sur la face inférieure 2d de l'enceinte de décontamination 2.

De préférence, les roues 19a, 19b comprennent un frein.

La mobilité de la station de nettoyage et d'ensachage 1 permet de la transporter et de facilement la déplacer sur un chantier de désamiantage.

La figure 1 représente la station de nettoyage et d'ensachage 1 dans une position déployée, prête à l'emploi pour le nettoyage par rinçage à l'eau et l'ensachage de déchets d'amiante.

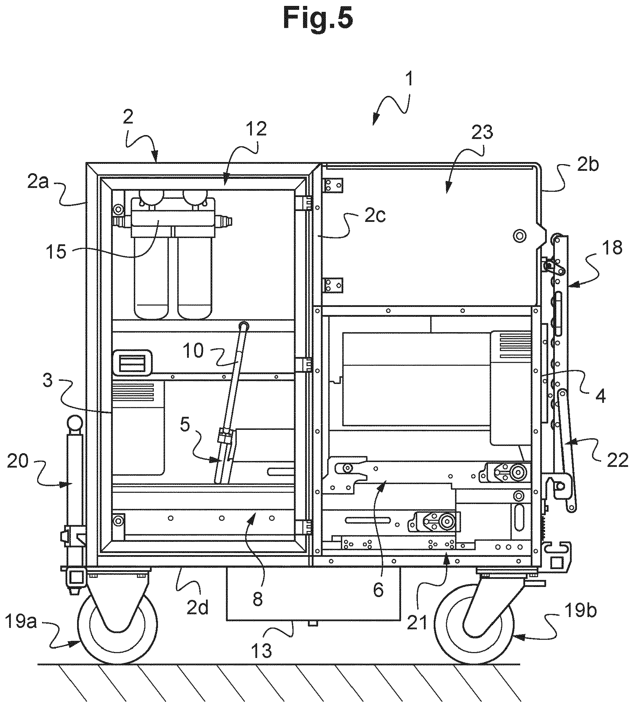

Une position reployée de la station de nettoyage et d'ensachage 1 est représentée à la figure 5. Une telle position reployée facilite son transport.

En particulier, le convoyeur de dépose 8 et le convoyeur de récupération 18 peuvent être configurés pour être déplacés entre une position déployée et une position reployée.

Une jambe de force 20 peut avantageusement soutenir la première extrémité 8a du convoyeur de dépose 8 en position déployée.

Dans l'exemple illustré, l'enceinte de décontamination 2 comporte des rails 21 le long desquels le convoyeur de dépose 8 peut coulisser pour le passage entre les positions reployée et déployée. Avantageusement, le convoyeur d'évacuation 6 est configuré pour pivoter de sorte que la première extrémité 6a du convoyeur d'évacuation 6 est amenée à un niveau supérieur au convoyeur de dépose 8 et passant par la sortie 4 de l'enceinte de décontamination 2.

Comme on peut le voir à la figure 5, en position reployée pour le transport, le convoyeur d'évacuation 6 et le convoyeur de dépose 8 sont positionnées dans l'enceinte de décontamination 2. Le convoyeur d'évacuation 6 est positionné au-dessus du convoyeur de dépose 8, dans un plan supérieur et parallèle à celui du convoyeur d'évacuation 6.

Une jambe de force 22 peut également soutenir le convoyeur de récupération 18 en position déployée.

Dans l'exemple illustré, en position reployée, le convoyeur d'évacuation 6 est rabattu contre la face arrière 2b de l'enceinte de décontamination 2.

A cet égard, le support 17 amovible du dispositif d'ensachage 7 peut être retiré de la face arrière 2b de l'enceinte de décontamination 2. L'enceinte de décontamination 2 peut comprendre un compartiment de rangement 23 dans lequel le support 17 peut être stocké en position reployée de la station de nettoyage et d'ensachage 1.

Le chantier de désamiantage peut être délimité en une zone de travail 24 polluée, contaminée par de l'amiante, et une zone de chantier 25 propre, décontaminée.

La station de nettoyage et d'ensachage 1 en position déployée peut être positionnée de sorte que l'enceinte de décontamination 2 se situe dans la zone de travail 24 et la sortie 4 à l'interface entre la zone de travail 24 et la zone de chantier 25. De cette façon, l'entrée et le lavage des déchets se font dans la zone de travail 24 alors que la sortie des déchets lavés et ensachés est effectuée dans la zone de chantier 25 sans risques de contamination de cette dernière.

Un premier opérateur présent dans la zone de travail 24 dépose des déchets d'amiante, de préférence emballés dans un premier sac, sur le convoyeur de dépose 8.

L'enceinte de décontamination 2 isole les déchets contaminés et protège le deuxième opérateur et l'environnement de la zone de chantier 25.

Le fonctionnement du convoyeur de dépose 8 peut être actionné manuellement par le premier opérateur à l'aide, par exemple d'un bouton poussoir.

On pourra prévoir que le convoyeur de dépose 8 comprenne des moyens de détection de déchets de la présence de déchets sur le convoyeur de dépose 8 pour sa mise en route autonome.

Le convoyeur de dépose 8 achemine les déchets jusqu'au dispositif de lavage 5 et en direction du convoyeur d'évacuation 6.

Sur le trajet des déchets, l'anneau de pulvérisation 10 peut rincer les déchets au fur et à mesure qu'ils le traversent.

Selon une alternative, les buses 10a de l'anneau de pulvérisation 10 peuvent être configurés pour diriger l'eau vers les déchets lorsque ceux-ci sont positionnés à l'arrêt sur le convoyeur de dépose 8 dans l'enceinte de décontamination 2.

Après rinçage, le sac de déchets est acheminé par le convoyeur d'évacuation 6 en direction de la sortie 4 de l'enceinte de décontamination 2, traversant le tunnel formé par l'élément supérieur 6c et la deuxième extrémité 6b du convoyeur d'évacuation 6, avant d'être sur-ensaché.

De préférence, les moyens de détection du convoyeur d'évacuation 6 détecte la présence des déchets rincés et les achemine automatiquement vers la sortie 4.

Au fur et à mesure que les déchets sortent, le deuxième opérateur présent dans la zone de chantier 25 déploie le sac infini autour du sac de déchets sur le convoyeur de récupération 18 de façon à sur-ensacher le sac de déchets.

Selon une alternative, on pourra prévoir que le déploiement du sac infini autour des du sac de déchets soit réalisé de manière automatique.

Le deuxième opérateur ferme ensuite le sac et peut alors récupérer les déchets d'amiante rincés et sur-ensachés.

La station de nettoyage et d'ensachage 1 apporte une solution de décontamination facile et rapide à mettre en place entre une zone de travail et une zone de chantier précisément délimitées et contrôlées d'un chantier de désamiantage pour le nettoyage et le sur-ensachage de déchets amiantés.

Une telle station de nettoyage et d'ensachage est également facilement transportable, pouvant être déplacée par chariot élévateur, grue, treuil, ou encore par force humaine.

En outre, la station de nettoyage et d'ensachage permet de limiter et automatiser certaines manipulations des opérateurs, réduisant leur fatigue et les risques de troubles musculosquelettiques.

## Revendications

1. Station de nettoyage et d'ensachage de déchets d'amiante, comprenant une enceinte de décontamination (2), une entrée (3) des déchets dans l'enceinte de décontamination (2), une sortie (4) des déchets hors de l'enceinte de décontamination (2), des moyens d'acheminement (6) des déchets entre l'entrée (3) et la sortie (4), un dispositif de lavage (5) des déchets disposé entre l'entrée (3) et la sortie (4) sur le trajet des déchets, et un dispositif d'ensachage (7) des déchets disposé en aval du dispositif de lavage (5).

2. Station selon la revendication 1, comprenant au moins un convoyeur de dépose (8) disposé au moins partiellement en amont de l'entrée (3) des déchets et raccordé aux moyens d'acheminement (6) des déchets entre l'entrée (3) et la sortie (4) de l'enceinte de décontamination (2).

3. Station selon la revendication 1 ou 2, comprenant au moins un convoyeur de récupération (18) disposé en aval de la sortie (4) des déchets pour la récupération des déchets lavés et ensachés.

4. Station selon la revendication 2 ou 3, dans laquelle le convoyeur de dépose (8) et/ou le convoyeur de récupération (18) sont configurés pour être déplacés entre une position déployée et une position reployée.

5. Station selon l'une quelconque des revendications précédentes, dans laquelle les moyens d'acheminement (6) comprennent au moins un convoyeur d'évacuation (6) disposé entre le dispositif de lavage (5) et la sortie (4) des déchets de l'enceinte de contamination (2), le convoyeur d'évacuation (6) comportant une première extrémité (6a) connectée au dispositif de lavage (5) et une deuxième extrémité (6b) opposée raccordée à la sortie (4) des déchets, la sortie (4) des déchets et la deuxième extrémité (6b) étant positionnées à une position supérieure à la première extrémité (6a).

6. Station selon la revendication 5, dans laquelle le convoyeur d'évacuation (6) comprend des moyens de détection de déchets sur le convoyeur d'évacuation (6).

7. Station selon l'une quelconque des revendications précédentes, dans laquelle le dispositif d'ensachage (7) est positionné sur la sortie (4) de l'enceinte de contamination (2).

8. Station selon l'une quelconque des revendications précédentes, comprenant des moyens de déplacement (19a, 19b) de la station de nettoyage et d'ensachage (1).

9. Station selon l'une quelconque des revendications précédentes, dans laquelle le dispositif de lavage (5) comporte un dispositif de traitement des eaux comportant une cuve de récupération d'eau (13), une boucle de circulation d'eau (14) fermée fluidiquement connectée à la cuve de récupération (13), et au moins un filtre (15) positionné sur la boucle de circulation (14) en aval de la cuve de récupération d'eau (13).

10. Station selon l'une quelconque des revendications précédentes, dans laquelle le dispositif de lavage (5) comporte un anneau de pulvérisation (10) configuré pour rincer les déchets sur 360°.

## Revendications modifiées

### Revendications modifiées conformément à la règle 137(2) CBE.

1. Station de nettoyage et d'ensachage de déchets d'amiante, comprenant une enceinte de décontamination (2), une entrée (3) des déchets dans l'enceinte de décontamination (2), une sortie (4) des déchets hors de l'enceinte de décontamination (2), des moyens d'acheminement (6) des déchets entre l'entrée (3) et la sortie (4), un dispositif de lavage (5) des déchets disposé entre l'entrée (3) et la sortie (4) sur le trajet des déchets, et un dispositif d'ensachage (7) des déchets disposé en aval du dispositif de lavage (5), le dispositif d'ensachage (7) étant positionné sur la sortie (4) de l'enceinte de contamination (2).

2. Station selon la revendication 1, comprenant au moins un convoyeur de dépose (8) disposé au moins partiellement en amont de l'entrée (3) des déchets et raccordé aux moyens d'acheminement (6) des déchets entre l'entrée (3) et la sortie (4) de l'enceinte de décontamination (2).

3. Station selon la revendication 1 ou 2, comprenant au moins un convoyeur de récupération (18) disposé en aval de la sortie (4) des déchets pour la récupération des déchets lavés et ensachés.

4. Station selon la revendication 2 ou 3, dans laquelle le convoyeur de dépose (8) et/ou le convoyeur de récupération (18) sont configurés pour être déplacés entre une position déployée et une position reployée.

5. Station selon l'une quelconque des revendications précédentes, dans laquelle les moyens d'acheminement (6) comprennent au moins un convoyeur d'évacuation (6) disposé entre le dispositif de lavage (5) et la sortie (4) des déchets de l'enceinte de contamination (2), le convoyeur d'évacuation (6) comportant une première extrémité (6a) connectée au dispositif de lavage (5) et une deuxième extrémité (6b) opposée raccordée à la sortie (4) des déchets, la sortie (4) des déchets et la deuxième extrémité (6b) étant positionnées à une position supérieure à la première extrémité (6a).

6. Station selon la revendication 5, dans laquelle le convoyeur d'évacuation (6) comprend des moyens de détection de déchets sur le convoyeur d'évacuation (6).

7. Station selon l'une quelconque des revendications précédentes, comprenant des moyens de déplacement (19a, 19b) de la station de nettoyage et d'ensachage (1).

8. Station selon l'une quelconque des revendications précédentes, dans laquelle le dispositif de lavage (5) comporte un dispositif de traitement des eaux comportant une cuve de récupération d'eau (13), une boucle de circulation d'eau (14) fermée fluidiquement connectée à la cuve de récupération (13), et au moins un filtre (15) positionné sur la boucle de circulation (14) en aval de la cuve de récupération d'eau (13).

9. Station selon l'une quelconque des revendications précédentes, dans laquelle le dispositif de lavage (5) comporte un anneau de pulvérisation (10) configuré pour rincer les déchets sur 360°.
